(19) Europäisches Patentamt
European Patent Office
Office européen des brevets

(11) **EP 2 357 487 A2**

(12) **EUROPÄISCHE PATENTANMELDUNG**

(43) Veröffentlichungstag:
   **17.08.2011 Patentblatt 2011/33**

(51) Int Cl.:
   ***G01S 7/292*** *(2006.01)*

(21) Anmeldenummer: **10460015.0**

(22) Anmeldetag: **30.04.2010**

(84) Benannte Vertragsstaaten:
   **AT BE BG CH CY CZ DE DK EE ES FI FR GB GR
   HR HU IE IS IT LI LT LU LV MC MK MT NL NO PL
   PT RO SE SI SK SM TR**
   Benannte Erstreckungsstaaten:
   **AL BA ME RS**

(30) Priorität: **05.05.2009 PL 38795809**

(71) Anmelder: **Uniwersytet Technologiczni-
   Przyrodniczy
   Im. Jana I Jedrzeja Sniadeckich W Bydgoszcz
   85-225 Bydgoszcz (PL)**

(72) Erfinder: **Die Erfindernennung liegt noch nicht vor**

(74) Vertreter: **Jankowski, Piotr et al
   Zurawinowa 24
   85-361 Bydgoszoz (PL)**

(54) **Das Verfahren und System zur Erkennung von kurzen Ortungssignalen**

(57)   Gegenstand der Erfindung ist das Verfahren und das System zur Aufdeckung von kurzen Ortungssignalen (BT<100) mit linearer Frequenzmodulation (der Chirp-Signale), bei dem die Wirksamkeit der Aufdeckung von derartigen Signalen bei der Anwendung von *n* parallelen, digitalen, in der Zeitfunktion angepassten Filtrationen weitgehend von der Anfangsphase des Signals und von der Frequenz seiner Abtastung abhängt. Der Schwerpunkt des Verfahrens gemäß der Erfindung ist dadurch gekennzeichnet, dass um die Anzahl der Filtrationen, welche unter Einhaltung der maximalen Sensibilität und Auflösung der Aufdeckung von kurzen Chirp-Signalen angepasst werden, zu reduzieren, automatische Anwahl von optimaler Abtastphase des Eingangssignals aufgrund des Vergleichs von maximum maximorum des Eingangssignals der Filter im aktuellen Zeitbereich des Auffangens des Ortungssignals mit derartigem Signal aus dem vorherigen Zeitbereich unter Berücksichtigung der Richtung der Abtastphasenänderung im vorherigen Zeitbereich des Auffangens des Ortungssignals angewendet wurde.

EP 2 357 487 A2

**Beschreibung**

Gegenstand der Erfindung ist das Verfahren und das System zur Aufdeckung von kurzen Ortungssignalen (BT<100) mit linearer Frequenzmodulation (der Chirp-Signale), bei dem die Wirksamkeit der Aufdeckung von derartigen Signalen bei der Anwendung von digitalen Techniken und der im Zeitbereich angepassten Filtration weitgehend von der Anfangsphase des Signals und von der Frequenz seiner Abtastung abhängt.

Die polnische Patentbeschreibung Nr. 381752 offenbart bereits das Verfahren zur Aufdeckung von kurzen Chirp-Ortungssignalen, bei dem eine gemeinsame analog-digitale Umwandlung des Eingangssignals für $n$ parallele in der Zeit angepasste Filtrationen genutzt wird. Die Ergebnisse jeder von ihnen werden nicht linearen Operationen unterzogen, welche auf Beseitigung von negativen Geflechten beruhen. Anschließend werden die Ergebnisse einer diffusen Extrem-Analyse unterzogen, wobei die analog-digitale Signalumwandlung mit der Abtastungsfrequenz $f_s$ nah der Nyquist-Frequenz erfolgt, die entsprechend diesem Signal gewählt wurde. Die Gewichtsfaktoren mit gleicher Zahl für jede Filtration werden dagegen in Anlehnung an $n$-mal gelichtete und umgekehrte Losreihe dieses Signals gewählt, welche bei der Anwendung einer $n$-mal höherer Abtastfrequenz als $f_s$ bestimmt wird.

Das System gemäß der Patentbeschreibung Nr. 381752 enthält einen analog-digitalen Wandler und einen Block zur Umwandlung von digitalen Signalen, der sich aus $n$ mit Speicher für Gewichtsfaktoren angepassten Filtern zusammensetzt, die seriell mit $n$ Blocks zur Beseitigung von negativen Geflechtswerten, $n$ Extrem-Analysatoren und einem gemeinsamen Ausgangssystem (MAX) zur Wahl von maximalen Geflechtswerten verbunden werden, wobei alle Blocks mit Signalen mit $f_s$-Frequenz getakt werden.

Die Anwendung von $n$ parallelen in der Zeit angepassten Filtrationen ermöglicht die maximale Sensibilität des Ortungssystem, die ausschließlich bei den Abtastfrequenzen $f_s$ nahe der Nyquist-Frequenz zu erzielen ist, und $n$-malige Erhöhung der Zeitauflösung im Rahmen eines Abtastbereiches $T_s = 1/f_s$ zu erreichen.

Der Schwerpunkt des Verfahrens gemäß der Erfindung ist dadurch gekennzeichnet, dass um die Anzahl der Filtrationen, welche unter Einhaltung der maximalen Sensibilität und Auflösung der Aufdeckung von kurzen Chirp-Signalen angepasst werden, zu reduzieren, automatische Anwahl von optimaler Abtastphase des Eingangssignals aufgrund des Vergleichs von maximum maximorum des Eingangssignals der Filter im aktuellen Zeitbereich des Auffangens des Ortungssignals mit derartigem Signal aus dem vorherigen Zeitbereich unter Berücksichtigung der Richtung der Abtastphasenänderung im vorherigen Zeitbereich des Auffangens des Ortungssignals angewendet wurde.

Bei Anwendung von $n$ parallelen digitalen in der Zeit angepassten Filtrationen und angewählter *Abtast-*frequenz $f_s$ des Eingangssignals sind die Impulscharakteristiken (Antworten) jeder Filtration gegeneinander um $\Delta Ts = T_s / n$ verschoben. Die Wahrscheinlichkeit der Aufdeckung des Geflechtes mit maximal möglichem Wert steigt mit der Verringerung des Abstands $\Delta T_s$.

Der Einfluss des Abstands $\Delta T_s$, auf die Sensibilität der Signalerkennung wurde anhand des nachfolgenden Beispiels dargestellt. Als Ortungssignal wurde ein Chirp-Signal mit folgenden Parametern angenommen: Signaldauer $T = 2,5$ μs, Frequenzband $B = 15$ **MHz**, Anfangsfrequenz $f_1 = 0$, Endfrequenz $f_2 = 15$, **MHz**, $B \cdot T = 37,5,$ Anfangsphase $\varphi_0 = 95°$, Signalabtastfrequenz $f_s = 30,2$ **MHz**. Die Computersimulationen einer an ein Signal mit so angewählten Parametern angepassten Filtration haben erwiesen, dass am Filterausgang **SNRmax=49,57 dB**, gezählt als das Verhältnis des maximalen Geflechtswertes (Hauptblattes) zum höchsten Wert unter den übrigen Geflechten (des maximalen seitlichen Blattes) zu erzielen ist. So ein Ergebnis ist im Fall erzielbar, wenn die Chirp-Signale an der Sendeseite und an der Empfangsseite synchronisiert sind. Bei fehlender Synchronisierung, was bei realen Ortungssystemen der Fall ist, ist das Auffangen eines Geflechts mit einem höchstmöglichen Wert zufällig und hängt von $\Delta T_s$ ab.

Die Simulationsuntersuchungen der an reale Bedingungen angepassten Filtration haben gezeigt, dass beim Auffangen eines Ortungssignals mit o.g. Parametern unter Anwendung von beispielsweise **64** Filtern ein **SNR** im Bereich von **SNR$_{max}$** bis **SNR$_{max}$-6,5 dB** erzielt wird, für $n = 128$ verringert sich dieser Bereich bis auf **1,3 dB** und für $n = 256$ - bis auf **0,5 dB**. Es ist zu bemerken, dass die Anwendung von einem angepassten Filter und einfache Erhöhung der Abtastfrequenz, um den Abstand $\Delta T_s$ zu verringern, das erwartete Ergebnis nicht erzielen lässt, weil der o.g. Wert **SNR$_{max}$** ausschließlich bei den Abtastfrequenzen $f_s$ nah der Nyquist-Frequenz zu erzielen ist.

Die Verringerung des Abstands $\Delta T_s$ kann auch erzielt werden, indem die Wahl der Abtastphase der Eingangssignale auf dem Nonius-Prinzip basieren wird. In diesem Fall $\Delta T_s = \frac{Ts}{k \cdot n}$ , wo $k$ - Anzahl der diskreten Abtastphasenwerte im Bereich eines Zeitabstands $T_s / n$.

Bei der Anwendung von automatischer Abtastphasenanwahl ist es möglich den erforderlichen Abstand $\Delta T_s$ durch gegenseitige Wahl von unterschiedlichen Werte $k$ und $n$ zu erzielen, sodass das Resultat $k \cdot n$ unverändbar ist. Zum Beispiel, um $\Delta T_s = T_s / 64$ zu erzielen, kann man $k = 8, n = 8$ bzw. $k = 64, n = 1$ annehmen. Im letzten Fall wird ein Filter bei **64** möglichen Abtastphasenwerten verwendet.

Gemäß der Erfindung erfolgt die automatische Anwahl der Abtastphase der Eingangssignale anhand des Vergleichs von Ausgangssignalen der Filter mit maximalem Wert (maximum maximorum) im aktuellen und vorhergehenden Zeitraum des Auffangens von Ortungssignalen. Als Zeitraum des Auffangens von Ortungssignal ist die Zeitspanne zwischen zwei weiteren Ortungssignalen, die durch den Sender dieser Signale gesendet werden, zu verstehen. Der Unterschied zwischen maximum maximorum der o.g. Signale wird zur Änderung der Abtastphase um einen diskreten Wert im nächsten Zeitraum des Auffangens des Ortungsbereichs genutzt. Die Richtung der Änderung der Abtastphase hängt von der Richtung der Phasenänderung im vorhergehenden Zeitraum des Auffangens des Ortungssignals ab.

Das Prinzip der Änderung der Abtastphase des Eingangssignals ist folgendes:

1. Wenn $|y_m-y_{m-1}|\leq\delta_s$, bleibt die Phase unverändert, wo $y_m$ - maximum maximorum des Ausgangssignals der Filter im aktuellen Zeitbereich des Auffangens des Ortungssignals, $y_{m-1}$ - maximum maximorum des Eingangssignals der Filter im vorigen Zeitbereich, $\delta s$ - vorgegebene Schwelle;

2. Wenn $y_m-y_{m-1}>\delta s$, erfolgt die Änderung der Phase in der vorherigen Richtung, und bei unveränderter vorherigen Phase erfolgt die Änderung in Richtung ihrer Erhöhung;

3. Wenn $y_m-y_{m-1}<-\delta s$, erfolgt die Änderung der Phase in entgegengesetzter Richtung zu voriger Richtung, und bei unveränderter vorherigen Phase erfolgt die Änderung in Richtung ihrer Verringerung;

Das System zur Erkennung von kurzen Ortungssignalen gemäß der Erfindung umfasst das Distributionssystem (4) und Abtastphasensteuerblock (8), der sich aus folgenden Elementen zusammensetz: erster Verzögerungsblock (8.1), logisch-arithmetisches System (8.2), zweiter Verzögerungsblock (8.3) und das System (8.4), das maximum maximorum aus den Ausgangssignalen (9) auswählt, wobei der Blockausgang (MAX) mit dem Systemeingang (8.4) verbunden ist, dessen Ausgang mit dem Eingang des zweiten Verzögerungsblock (8.3) und mit einem der Eingänge des logisch-arithmetischen Systems (8.2) verbunden ist, dessen zweiter Eingang mit dem Ausgang des Blocks (8.3) und der dritte Eingang mit dem Ausgang des ersten Verzögerungsblock (8.1) verbunden ist, dessen Eingang mit einem der Ausgänge des Blocks (8.2) verbunden ist, dessen zweiter Ausgang mit dem Steuereingang des Distributionssystems (4) verbunden ist, das aus den Taktsignalen, die vom Generator (5) gegeben werden, gelichtete Taktsignale (6) mit regulierbarer Phase erzeugt, welche an die Takteingänge sämtlicher Systeme des Blocks (7) sowie an den Takteingang des analog-digitalen Wandlers (3) geleitet werden, der die Eingangssignale (1) abtastet. Die Taktung der Blocksysteme (8) erfolgt über Taktsignale (2) die vom Geber der Ortungssignale gegeben werden.

Der Vorteil des Systems gemäß der Erfindung liegt in der Möglichkeit, die Anzahl der Kanäle der Umwandlung der digitalen Signale (im extremen Fall bis auf ein) zu reduzieren, bei Einhaltung von maximaler Sensibilität und Auflösung des Ortungssystems bei der Aufdeckung von kurzen Chirp-Signalen.

Das Schema des Systems gemäß der Erfindung mit Ausführungsbeispiel wurde auf der angehängten Zeichnung dargestellt, in der das System mit dem analog-digitalen Wandler (3), dem Distributionssystem (4), dem Generator (5), dem Block zur Umwandlung von digitalen Signalen (7) und dem Block zur Steuerung der Abtastphase (8) ausgestattet wurde, wobei der Block (7) besteht aus $n$ angepassten Filtern (F1), (F2), ..., (Fn) mit Speichern (M1), (M2), ..., (Mn) für Gewichtsfaktoren, $n$ Blocks zur Beseitigung von negativen Geflechtswerten (D1), (D2), ..., (Dn), $n$ Extrem-Analysatoren (AE1), (AE2), ..., (AEn) und einem Ausgangssystem (MAX), das die maximalen Geflechtswerte auswählt, und das Block (8) umfasst den ersten Verzögerungsblock (8.1), das arithmetisch-logische System (8.2), den zweiten Verzögerungsblock (8.3) und das System (8.4), das aus den Ausgangssignalen (9) ihr maximum maximorum in jedem Zeitbereich des Auffangens des Ortungssignals auswählt.

Die Funktionsweise des Systems gemäß der Erfindung besteht darin, dass an den Eingang des Systems, der der Eingang des analog-digitalen Wandlers (3) ist, das analoge Signal (1) aus dem Empfänger des Ortungssystems gegeben wird. Im Wandler (3) wird das Signal (1) in ein digitales Signal mit Abtastfrequenz $f_s$, die an das Ortungssignal angepasst ist, umgewandelt, wobei die Anfangsphase der Abtastsignale (6) automatisch geändert wird, um sich maximal an die empfangene Ortungssignale anzupassen. Im Block (7) wird das digitale Eingangssignal einer Filtration unterzogen, die anhand der $n$ parallel in Anlehnung an Sets von Gewichtsfaktoren, die in den Speichern (M1), (M2), ..., (Mn) angeordnet sind, arbeitenden Filtern (F1), (F2), ..., (Fn) angepasst wird. Die negativen Werte der Ausgangssignale der Filter werden entsprechend in Blocks (D1), (D2), ..., (Dn) ausgesondert und anschließend an die Eingänge der Blocks (AE1), (AE2), ..., (AEn) gegeben, die den maximalen Wert des Geflechts und seine Position jeweils für jeden entsprechenden Filter bestimmen. Die Signale aus den Blockausgängen (AE1), (AE2), ..., (AEn) werden dagegen an den Block (MAX) gegeben, der den Maximalwert des Signals aus den an seinen Eingang gegebenen Signalen mit der vorgegebenen Schwelle $\delta_y$ zur Identifizierung des Ortungssignals vergleicht. Die Ausgangssignale (9) des Blocks (MAX) enthalten folgende Informationen: maximales Geflecht in jedem Abtastungsbereich des Ortungssignals, Position des Geflechts mit maximalem Wert und Identifizierung des Ortungssignals.

Die Signale mit maximalem Wert in jedem Zeitbereich der Abtastung werden aus dem Ausgang des Blocks (MAX) an den Eingang des Blocks (8.4) gegeben, der das maximum maximorum des Signals $y_m$ im aktuellen Zeitbereich des Auffangens des Ortungssignals auswählt und es an den Eingang des arithmetisch-logischen Systems (8.2) weiterleitet. An den zweiten Eingang des Systems (8.2) wird das analoge Signal $y_{m-1}$ aus dem vorigen Zeitbereich des Auffangens des Ortungssignals gegeben, das im Verzögerungsblock (8.3) abgelegt wird. Das arithmetisch-logisches System erzeugt auf der Grundlage der Signale $y_m$, $y_{m-1}$ und des Signals aus dem Ausgang des Verzögerungsblocks (8.1) ein Steuersignal für das Distributionssystem (4). Im Verzögerungsblock (8.1) wird das Ausgangssignal des arithmetisch-logischen Systems (8.2) gespeichert, das die Information über Richtung der Abtastphasenänderung im vorigen Zeitbereich des Auffangens des Ortungssignals enthält.

Das Distributionssystem (4) erzeugt Taktsignale (6) mit der Frequenz $f_s$ im Wege der Lichtung der Generatorsignale (5) mit der Frequenz $k \cdot n \cdot f_s$, wobei die Änderung der Signalphase am Blockausgang (4) mit der

Diskretion $\Delta T_s = \dfrac{T_s}{k \cdot n}$ im Bereich von **0** bis $T_s / n$

erfolgt. In jedem Zeitbereich des Auffangens des Ortungssignals kann die Phase des Abtastsignals durch den Einfluss des Steuersignals in Richtung der Erhöhung bzw. Verringerung nur um einen diskreten Wert $\Delta T_s$, geändert werden. Die Taktung des Blocks (8) erfolgt über die Taktsignale (2), die vom Sender der Ortungssignale gegeben werden, wobei nach dem Abschluss des nächsten Zeitbereichs des Auffangens des Ortungssignals das Ausgangssignal $y_m$. des Blocks (8.4) im Block (8.3), das Ausgangssignal des Blocks (8.2) im Block (8.1) abgespeichert wird. Anschließend erfolgt das Reset des Blocks (8.4).

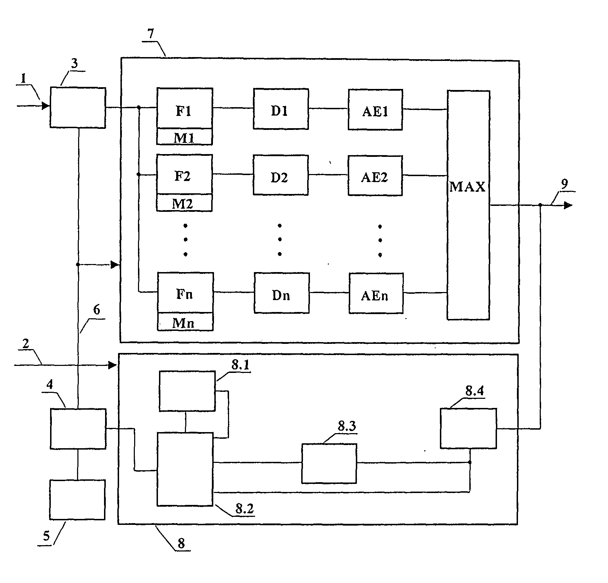

## Patentansprüche

1. Das Verfahren zur Aufdeckung von kurzen Chirp-Ortungssignalen unter Anwendung einer gemeinsamen analog-digitalen Umwandlung des Eingangssignals für $n$ parallele Filtrationen, die in der Zeit angepasst sind, deren Ergebnisse nichtlinearen Operationen, die auf Beseitigung von negativen Geflechten beruhen, und anschließend einer diffusen Extrem-Analyse unterzogen werden, wobei die analog-digitale Umwandlung des Eingangssignals erfolgt bei einer Abtastfrequenz $f_s$ nah der Nyquist-Frequenz, die entsprechend diesem Signal angewählt wurde. Die Gewichtsfaktoren mit gleicher Zahl für jede Filtration werden dagegen in Anlehnung an $n$-mal gelichtete und umgekehrte Losreihe dieses Signals angewählt, welche bei der Anwendung einer $n$-mal höherer Abtastfrequenz als $f_s$ bestimmt wird. Das Verfahren ist **dadurch gekennzeichnet, dass** automatische Anwahl optimaler Abtastphase des Eingangssignals auf der Grundlage des Vergleichs des maximum maximorum des Ausgangssignals der Filter im aktuellen Zeitbereich des Auffangens von Ortungssignals mit dem Signal aus dem vorigen Zeitbereich unter Berücksichtigung der Richtung der Phasenänderung im vorigen Zeitbereich des Auffangens des Ortungssignals angewendet wurde.

2. System zur Aufdeckung von kurzen Chirp-Ortungssignalen, das einen analog-digitalen Wandler sowie einen Block der Umwandlung von digitalen Signalen beinhaltet, der sich aus $n$ mit Speicher für Gewichtsfaktoren angepassten Filtern zusammensetzt, die seriell mit $n$ Blocks zur Beseitigung von negativen Geflechtswerten, **$n$** Extrem-Analysatoren und einem gemeinsamen Ausgangssystem (MAX) zur Wahl von maximalen Geflechtswerten verbunden werden, wobei alle Blocks mit Signalen mit einer Frequenz nah der Nyquist-Frequenz getakt werden, **dadurch gekennzeichnet, dass** Distributionssystem (4) und Abtastphasensteuerblock (8), der sich aus folgenden Elementen zusammensetz: erster Verzögerungsblock (8.1), logisch-arithmetisches System (8.2), zweiter Verzögerungsblock (8.3) und das System (8.4), das maximum maximorum aus den Ausgangssignalen (9) auswählt, wobei der Blockausgang (MAX) mit dem Systemeingang (8.4) verbunden ist, dessen Ausgang mit dem Eingang des zweiten Verzögerungsblock (8.3) und mit einem der Eingänge des logisch-arithmetischen Systems (8.2) verbunden ist, dessen zweiter Eingang mit dem Ausgang des Blocks (8.3) verbunden ist, und der dritte Eingang mit dem Ausgang des ersten Verzögerungsblock (8.1) verbunden ist, dessen Eingang mit einem der Ausgänge des Blocks (8.2) verbunden ist, dessen zweiter Ausgang mit dem Steuereingang des Distributionssystems (4) verbunden ist, das aus den Taktsignalen, die vom Generator (5) gegeben werden, gelichtete Taktsignale (6) mit regulierbarer Phase erzeugt, welche an die Takteingänge sämtlicher Systeme des Blocks (7) sowie an den Takteingang des analog-digitalen Wandlers (3) geleitet werden, der die Eingangssignale (1) abtastet. Die Taktung der Blocksysteme (8) erfolgt über Taktsignale (2) die vom Sender der Ortungssignale an entsprechende Eingänge dieser Systeme gegeben werden, was auf dem angehängten Schema dargestellt wurde.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- PL 381752